# EUROPEAN PATENT APPLICATION

(11) **EP 1 382 755 A1**
(43) Date of publication of application: **21.01.2004**
(21) Application number: 03102131.4
(22) Date of filing: 14.07.2003
(51) Int. Cl.: E02F 9/08, F16B 5/02

(54) **A device for connection between two mechanical elements**

(30) Priority: 19.07.2002 IT TO20020636
(71) Applicant: Fiat Kobelco Construction Machinery S.p.A., 10099 San Mauro Torinese (Torino) (IT)
(72) Inventor: Venesia, Dario, 10135, Torino (IT); Arzente, Claudio, 10036, Settimo Torinese (Torino) (IT)
(74) Representative: Vandenbroucke, Alberic

(57) **Abstract**

A device (10) for connection between two mechanical elements (11, 12; 19, 20). The device comprises a screw (14) designed to be fixed to one (12; 19) of the two elements (11, 12; 19, 20). Associated to the screw (14) is an arm (18) coupled thereto with play. The device (10) is particularly useful, for example, for releasably fixing a stabilising foot (19) of an excavator (100) to its supporting leg (20).

## Description

The present invention relates to a device for connection between two mechanical elements of any nature.

As an example, in stabilizer feet of earth-moving machines, the need exists to ensure that, when the supporting leg is raised, the stabilizer foot will present its own bottom surface in a position that is substantially vertical so as to ensure that the reflectors, set on this surface, are clearly visible during transport and additionally are in a safe position not sticking out from the side of the vehicle. For this purpose, in the forms of application so far known, threaded rods are used which have the function of struts. Each threaded rod must be screwed between the respective foot and the corresponding leg when the foot has to take up the vertical position. Conversely, when the excavator is operating in the working position, the foot is set resting on the ground. The operator must consequently unscrew the threaded rod and put it away for the time being. The foregoing evidently involves dead time and the inconvenience of having to put the threaded rod in places not suited for said purpose.

The need therefore is felt to provide a device which will enable a rapid coupling/uncoupling between two mechanical elements, a device which will moreover enable absorption of the vibrations between the two coupled elements and which, in the uncoupled position, will remain in place.

The purpose of the present invention is therefore to provide a device for connection between two mechanical elements according to the characteristics claimed in claim 1.

The device forming the subject of the present invention will now be described with reference to the annexed drawings, which illustrate two non-limiting applications thereof, in which:
Figure 1 illustrates a first application of the device for connection between two mechanical elements, which forms the subject of the present invention;
Figure 2 illustrates an enlarged, partially sectioned view of the device of Figure 1;
Figure 3 illustrates a second application of the device of Figure 1; and
Figure 4 illustrates an enlarged detail of Figure 3.

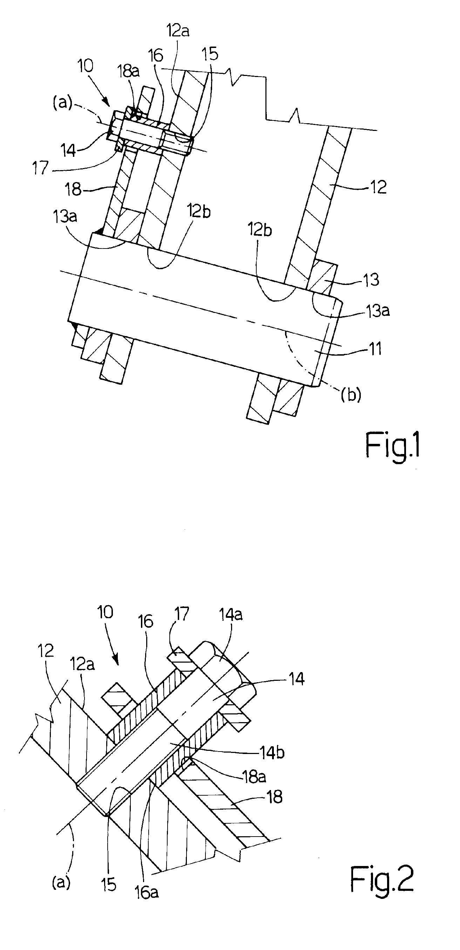

Figure 1 illustrates a first application of a connection device 10 according to the present invention. The device 10 connects a hinge 11 with a first element 12, which partially encloses, at the same time, a second element 13 so as to prevent it from being slid of the hinge 11.

The hinge 11 can be, for example, the element on which two arms 12, 13 of an excavator (not illustrated) are hinged.

More in particular, the device 10 comprises a screw 14 (Figure 2) provided with a head 14a and a shank 14b threaded at least partially. The screw 14 in turn has an axis of longitudinal symmetry (a) and is screwed in a threaded seat 15, having the same axis (a), provided in the first element 12.

Furthermore, extending coaxially to the axis (a) is a spacer bushing 16, fitted on the screw 14. The spacer bushing 16 is captured between, on the one hand, an outer surface 12a of the first element 12, and, on the other hand, a washer 17, upon which the head 14a of the screw 14 rests.

The unit consisting of the screw 14 and the spacer bushing 16 constitutes a hinge inserted in a through hole 18a made in an arm 18. Moreover, as illustrated in Figures 1 and 2, the through hole 18a is coupled, with a slight play, to the hinge. The arm 18, in the application of Figure 1, is welded to the hinge 11.

In this particular application, the device 10 prevents the elements 12, 13 from being slid of from the hinge 11, and, at the same time, enables slight oscillations of the first element 12 with respect to the hinge 11 itself, precisely thanks to the play existing between the through hole 18a and the outer surface of the spacer bushing 16.

As illustrated once again in Figure 1, the hinge 11 traverses the through hole 12b corresponding to the first element 12 and the through hole 13a made in the second element 13. The hinge 11 and the through holes 12b and 13a are coaxial and have one and the same axis of longitudinal symmetry (b), which is substantially parallel to the aforementioned axis of symmetry (a) of the screw 14.

The assembly of the device 10 can be readily inferred from what has been said previously. In fact, once the hinge 11, fixed to the arm 18, has been slid into the through holes 12b and 13a, the only operation necessary is screwing the screw 14 into the seat 15 provided on the first element 12, thus causing the spacer bushing 16 to be captured and tightened between the surface 12a of the element 12 and the washer 17.

As has been said, the simultaneous effect is thus obtained of connecting the hinge 11 to the first element 12, albeit leaving the latter the possibility of oscillating slightly, and the effect of preventing the hinge 11 itself from sliding out of the through holes 12b and 13a. In addition, the presence of play, which enables minor axial and radial displacements, prevents the weld between the hinge 11 and the arm 18 from being damaged by any possible vibrations of the machine (not illustrated completely) on which the two elements 12 and 13 are mounted.

Theoretically, it is not important for the spacer bushing 16 to be a separate element from the screw 14. In effect, it is possible to imagine a solution in which the spacer bushing 16 is formed of a single piece with the screw 14, provided that there is always a shoulder 16a (Figure 2) present to provide a support on surface 12a.

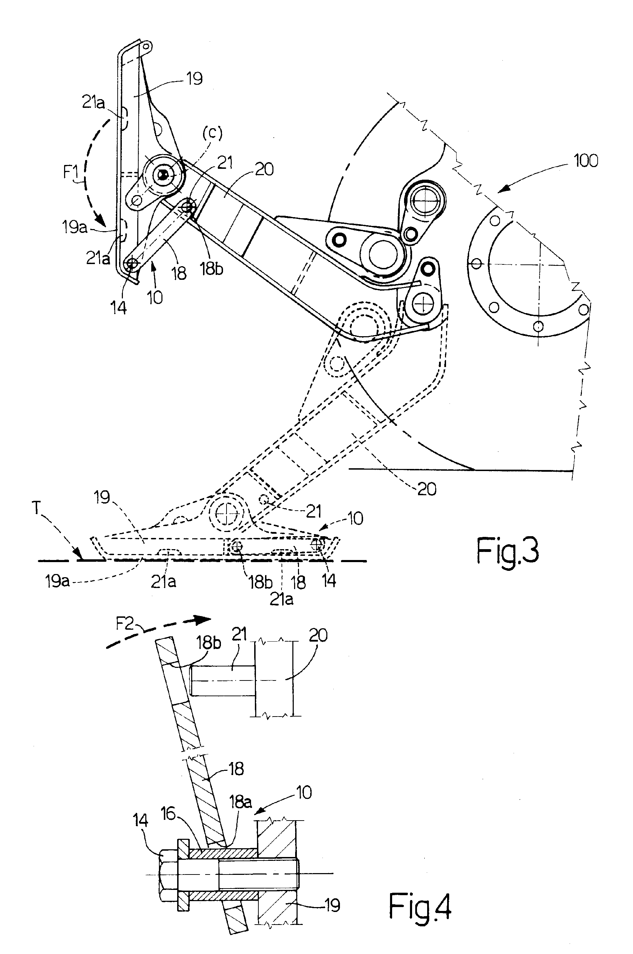

A second application of the device 10 is illustrated with reference to Figures 3 and 4.

It is to be noted, incidentally, that, wherever possible, in this second application the same numbering as that adopted in Figures 1 and 2 is preserved, and just the elements that are significant for the purpose of the present invention are described.

In the present case, the arm 18 functions as a strut for a stabilizing foot 19 of a leg 20 used in the rear part of an earth-moving machine 100 (illustrated only partially in Figure 3). The leg 20 and the corresponding stabilizing foot 19 are raised and lowered with respect to the ground T by known mechanisms, which are not described in detail herein.

In actual fact, when the leg 20 is located in the position of maximum elevation (during the displacements of the excavator), indicated by the solid line in Figure 3, an operator can use the arm 18 of the device 10 for keeping a surface 19a of the stabilizing foot 19 in a substantially vertical position (with respect to the ground T). This is necessary because, otherwise, the weight of the foot 19 itself would cause it to rotate about an axis (c) perpendicular to the plane of the drawing according to the direction indicated by the arrow F1. It should be said, incidentally, that the substantial perpendicularity of the surface 19a is important because in this way reflectors 21a located on the surface 19a itself will be clearly visible in order to point out the presence of the earth-moving machine 100 in an effective way.

As has been said, the device 10 used in the application illustrated in Figures 3 and 4 is similar to the one described with reference to Figures 1 and 2.

The only difference between the two applications consists in the fact that, whilst in the first application (Figures 1 and 2), as has been said, a second end of the arm 18 is welded to the hinge 11, in the second application (Figures 3 and 4) this second end has a slot 18b, which, if need be, can be coupled to a pin 21 fixed to the leg 20.

In the first application, the play existing between the through hole 18a and the outer surface of the spacer bushing 16 is much smaller than the play necessary in the application illustrated in Figures 3 and 4. In effect, in the first case, as has been said, the play serves only to absorb the vibrations and relative movements between the hinge 11 and the element 12, whilst in the second application the arm 18 must be displaced laterally to enable insertion of the pin 21 in the slot 18b according to a movement represented schematically by an arrow F2 (Figure 4).

In the position represented by a dashed line in Figure 3 (operating position of the earth-moving machine), in which the surface 19a is set resting on the ground T, the free end of the arm 18 is disconnected from the pin 21 in such a way that the arm 18 itself can be rotated in a counterclockwise direction so as to be received inside the foot 19, which has a substantially concave conformation.

The advantages of the present device are represented substantially by a greater simplicity and by a better maneuverability as compared to traditional connection devices.

## Claims

1. A device (10) for connection between two mechanical elements (11, 12; 19, 20), and
**characterized in that** the device (10) comprises screw means (14) designed to be fixed to one (12; 19) of the two elements (11, 12; 19, 20); an arm (18) being associated to said screw means (14) by means of a coupling with play.

2. A device (10) according to claim 1, **characterized in that** said arm (18) comprises, at a first end, a through hole (18a) of a diameter such as to obtain the play in said coupling with said screw means (14).

3. A device (10) according to claim 2, **characterized in that** a spacer bushing (16) extends coaxial to said screw means (14), and the coupling with play is obtained between said through hole (18a) and the outer surface of said spacer bushing (16).

4. A device (10) according to claim 3, **characterized in that** said spacer bushing (16) is clamped between a head (14a) of said screw means (14) and an outer surface of said one (12; 19) of the two elements (11, 12; 19, 20).

5. A device (10) according to any of the preceding claims, **characterized in that** a second end of said arm (18) is fixed integrally to the other one (11) of the two elements (11, 12; 19, 20).

6. A device (10) according to claim 5, **characterized in that** said second end of said arm (18) is welded to said other one (11) of the two elements (11, 12; 19, 20).

7. A device (10) according to claim 5 or 6, **characterized in that** said other one (11) of the two elements (11, 12; 19, 20) is a hinge (11) and said one element (12) is a first arm of an excavator (100).

8. A device (10) according to claim 7, **characterized in that** a second arm of said excavator (100) is operable to rotate around said hinge (11).

9. A device (10) according to claims 1 to 4, **characterized in that** a second end of said arm (18) comprises movable fixation means (18b).

10. A device (10) according to claim 9, **characterized in that** said movable fixation means (18b) comprises a slot (18b) for coupling said fixation means (18b) to a pin (21) fixedly connected to the other one (20) of the two elements (11, 12; 19, 20).

11. A device (10) according to claim 10, **characterized in that** said one element (19) is a stabilizing foot (19) of an excavator (100) and said other one (20) of the two elements (11, 12;19, 20) is a stabilizing leg (20) of said excavator (100).
